# EUROPEAN PATENT APPLICATION

(11) **EP 1 477 242 A1**
(43) Date of publication of application: **17.11.2004**
(21) Application number: 04102137.9
(22) Date of filing: 14.05.2004
(51) Int. Cl.: B09B 3/00

(54) **A method and a device for emptying cans**

(30) Priority: 15.05.2003 SE 0301414
(71) Applicant: Coriarius Aktiebolag, 663 11 Hammarö (SE)
(72) Inventor: Börjesson, Lennart, 663 92 Hammarö (SE); Eriksson, Roland, 663 91 Hammarö (SE)
(74) Representative: Johansson, Lars E.

(57) **Abstract**

The invention relates to a method of emptying cans (1). In accordance with the method of the invention, a can having a content of foodstuffs, for example, is placed in a holder, which at least encircles the can (1) and holds it in place. An excess pressure is created in the interior (2) of the can (1), so that the can will burst and substantially the entire contents of the can (1) will be thrown out of the can (1). Excess pressure may be created by supplying pressurized liquid (6). The invention also relates to a device for carrying out the method of the invention.

## Description

### TECHNICAL FIELD

The present invention relates to a method of emptying cans, especially preservation cans containing foodstuffs. The invention also relates to a device for handling and emptying of cans, such as preservation cans.

### BACKGROUND OF THE INVENTION

Large amounts of foodstuffs today are distributed packed in preservation cans. Normally, such a preservation can shall end up at a customer, who opens the can and consumes its contents, whereafter the empty can is thrown away together with other domestic waste. However, in reality, large amounts of preservation cans never will reach the consumers but will be discarded at an earlier stage. A reason therefore may be that canned food remains on sale in a store for so long a time that they simply get too old to be sold to a customer. Another reason may be that errors are made during the production stage, so that the contents of an entire consignment of preservation cans will be unfit for human consumption. Unsold preservation cans, which are returned from stores or which never may be delivered to a store, have to be taken care of in some way. One way of taking care of these cans is, of course, to simply dump them at a garbage dump. However, for one of several reasons, this is an inappropriate conduct. Firstly, garbage is a burden on the environment, and today we are trying as far as possible to reduce the amount of garbage produced. In several countries it occurs that a certain responsibility is laid on producers of packages by legislation. Secondly, the can as well as its contents are valuable raw materials that can be used for further production. Thus, foodstuffs that no longer are fit for human food can be used as animal food in certain cases. Foodstuffs, which can not be used as animal food, may be used in digesting, for example. Also the material of the cans as such, usually metal materials, may be reclaimed and used again in the production. Therefore, various devices and methods for taking care of preservation cans and separating the contents from the cans, so that that the cans and their contents may be used again, have been proposed. In U.S. Patent No. 5,230,917 there is shown how metal cans having a content of foodstuffs are fed through a hopper to a shredder having rotatably carried knives, which lacerate the cans, so that the cans are converted into strips or segments. Thereby also the contents of the cans are exposed. The cans and their contents then are forwarded on an oscillatory conveyor. Adjacent to the conveyor there is a water pipe, from which water may be sprayed against the shredded cans and their contents. At the bottom of the conveyor there is a screen, and water and smaller food particles may pass through the screen. Further it is stated that segments or strips of the can by means of a magnetic separator may be separated from other materials.

It is an object of the present invention to offer a method of and a device for handling and emptying cans, which method enables the separation of the cans from their contents. Further objects of the invention are to provide an environment friendly and cost-efficient emptying. The invention primarily is intended to be applied in connection with emptying preservation cans with foodstuffs, but the invention could also be applied in connection with the emptying of other cans than preservation cans.

### DESCRIPTION OF THE INVENTION

The invention relates to a method of emptying cans, which method comprises providing a can having an internal space, which internal space contains foodstuffs, for example. In preferred embodiments of the invention, the method may be carried out in the following way. The can is placed in a holder having a substantially encircling inner wall, which at least partly clasps the can and keeps it in place, and an excess pressure is created in the interior space of the can, so as to make the can burst and substantially the entire contents of the can be thrown out of the can. The excess pressure is created preferably by supplying a fluid to the interior space of the can. The fluid supplied to the can interior space suitably is a liquid, preferably water. Within the scope of the invention, it is conceivable to use a gas instead of a liquid, but the use of a liquid is more advantageous, as the pressure in the can will be raised quicker by means of a substantially incompressible liquid than by a compressible gas.

Liquid is best supplied from a pressurized tank. The pressure in the tank should suitably be at least 200 bar, preferably at least 500 bar, and still more preferred 1000 bar or more.

The liquid supplied from the pressurized tank is utilized to make a hole in the can, whereafter liquid from the pressurized tank may penetrate into the interior space of the can and create an excess pressure in the can. In accordance with an advantageous embodiment of the invention, prior to supplying liquid, a weakening in a wall of the can is provided at a point where liquid from the pressurized tank subsequently is to be applied. Thereby, it will be easier for the pressurized liquid to make a hole in the can.

It is also conceivable to make a hole instead of a weakening in one of the walls of the can, and to supply a fluid such as a gas or liquid through the hole in the can wall, so that excess pressure arises in the interior of the can.

On using liquid supplied from a pressurized tank, the liquid is best supplied to the interior space of the can for a period of at most 3 seconds, preferably at most 2 seconds, and still more preferred at most 1 second. It is to be understood, that in practice it is desirable that the process is as quick as possible, and that, therefore, the duration of the period may just as well be below 1 second. When liquid is supplied from the pressurized tank, this is preferably done through a nozzle having a discharge opening, the diameter of which is at most 2 mm, preferably at most 1,5 mm, and still more preferred at most 1 mm.

Normally, the can to be emptied is a substantially cylindrical can of circular cross-section, which cylindrical can of circular cross-section has two end walls facing each other, and at least one end wall being a lid, which is connected to the can by a separate closing operation, such as seaming, for example. Such cans often are used for preservation cans and have then a content of foodstuffs. The holder for the can preferably comprises a plurality of parts, which may be moved towards or away from one another to grip or release the can. In a first step of the emptying procedure, parts of the holder may be moved towards one another to grip the can around its cylindrical surface of circular cross-section and one of the end walls of the can. Liquid then is supplied from the pressurized tank through a nozzle located in a part of the holder brought to bear against one of the end walls of the can. Thereby, an opposed end wall in the shape of a lid will be pushed away from the can by the excess pressure together with the contents of the can.

The invention also relates to a device for handling and emptying cans, which device comprises a holder, in which a can to be emptied can be placed. The holder has a substantially encircling inner wall but is open outwards in at least one direction. The device for handling and emptying of cans further comprises means for creating such an excessive pressure in the interior of the can in relation to the surroundings of the can, that a lid of the can will be pushed out of the can and thrown away therefrom in the outward open direction of the holder.

The means, of the device, for creating an excessive pressure in the interior of a can preferably comprises a tank for liquid, which tank may be pressurized. The device further comprises a pipe away from the tank, and a valve arranged in connection with said pipe. By means of the valve, a predetermined amount of liquid may be released, which through the pipe may be aimed at a can placed in the holder.

The holder suitably is provided with a part forming a support surface, against which one end of the can may be applied. That part of the holder that forms a support surface is provided with a through bore, through which bore a predetermined amount of liquid may be aimed at a can placed in the holder, and the pipe from the pressure tank suitably opens in a nozzle placed in that part of the holder that forms a support surface. The device further may comprise means for weakening or penetrating the wall of the can at a point on the surface of the can where pressurized liquid is to be applied and conducted into the interior of the can. Such means are best placed adjacent the through hole in that part of the holder that is intended to form a support surface for one end of the can.

Preferably, at least one sensor is positioned adjacent the holder for detecting when the lid of the holder has been brought to contact. The sensor then suitably is connected to a control unit for the valve, which control unit is arranged to open the valve when a can bears against the support surface, so that pressurized liquid may be applied against the end of the can.

### DESCRIPTION OF THE FIGURES

Below, the invention will be described more in detail with reference to the attached drawings, in which:
Fig. 1 to Fig. 3 principally and schematically show a sequence of the method of the invention.
Fig. 4 is a side view of a holder intended to be used when carrying out the method of the invention.
Fig. 5 is a plan view of parts of the holder of Fig. 4 seen from above.
Fig. 6 is a perspective view of the holder shown in Fig. 4 and Fig. 5.
Fig. 7 shows how the holder of Fig. 4 to Fig. 6 is connected to a pressure tank.
Fig. 8 shows a detail from Fig. 7 on a greater scale.
Figs. 9 to 11 show in plan view, seen from above, an operating sequence of the method of the invention.
Figs 12 to 15 show in front view the same operating sequence as is shown in Figs. 9 to 11.

### DETAILED DESCRIPTION OF THE INVENTION

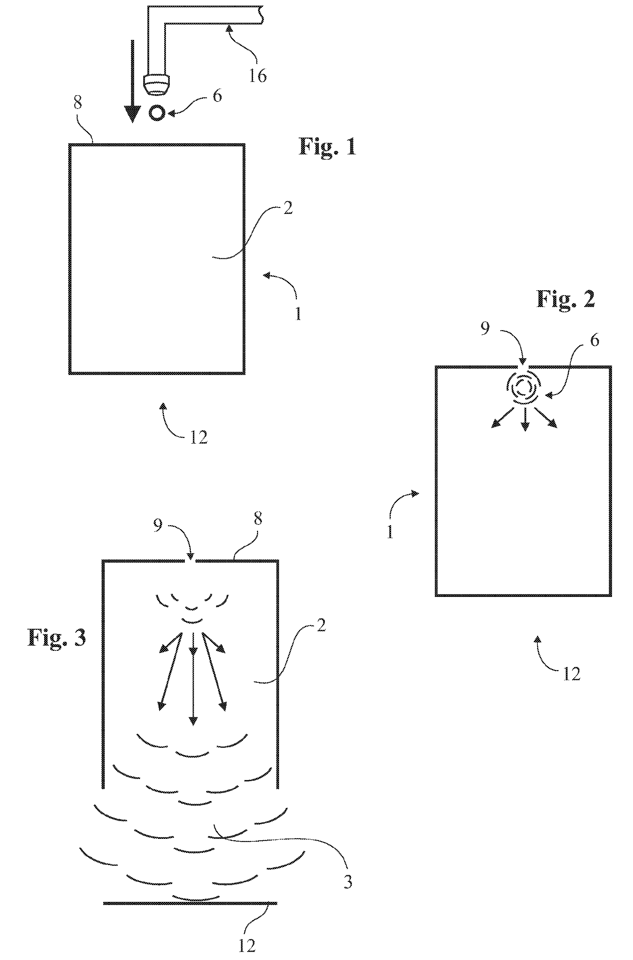

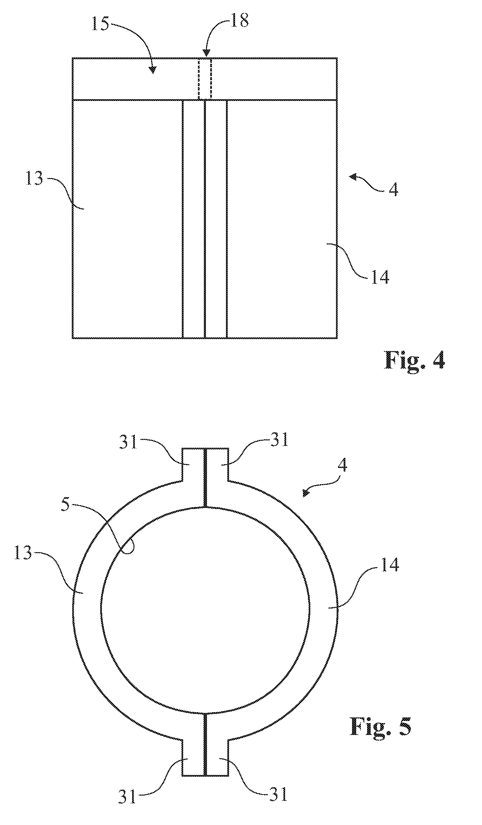

With reference to Figs. 1 to 3, the invention generally relates to a method of emptying cans **1**, particularly preservation cans having a content of foodstuffs that have to be condemned. According to the method of the invention, a can **1** is provided having an interior space **2**, which interior space **2** has a content **3** of foodstuffs **3**, for example. Thereafter, an excess pressure is created in the interior space **2** of can **1**, so that, owing to that, can **1** will burst and substantially the entire contents **3** of can **1** will be thrown out of can **1**. In accordance with the invention, the excess pressure may be created by supplying a pressurized fluid **6** to the interior space **2** of can **1**. In Fig. 1 there is indicated how a quantity of a fluid **6** is supplied through a pipe **16** and conducted against a wall of can **1**, preferably one of the ends of can **1**. As indicated in Fig. 2, fluid **6** penetrates the wall of the can and into the interior space **2** of can **1**. This may occur, for example, in that the fluid makes a hole **9** in can **1**, or in that a small hole **9** in the can is made in advance. When the pressurized fluid 6 penetrates into the interior space of can **1**, an internal excess pressure is created and the can bursts, throwing out the can contents. In Fig. 3 there is shown how the can bursts, in that a lid **12** is pushed out of can **1** and the contents of the can are thrown out. Advantageously, the fluid may be a liquid, particularly water. It is to be understood, that can **1** may burst also in another way than by a lid **12** being pushed away. For example, the wall or walls of can **1** may be ripped apart due to the interior excessive pressure. However, in preferred embodiments of the invention, can **1** bursts in that a lid is pushed out of can **1**.

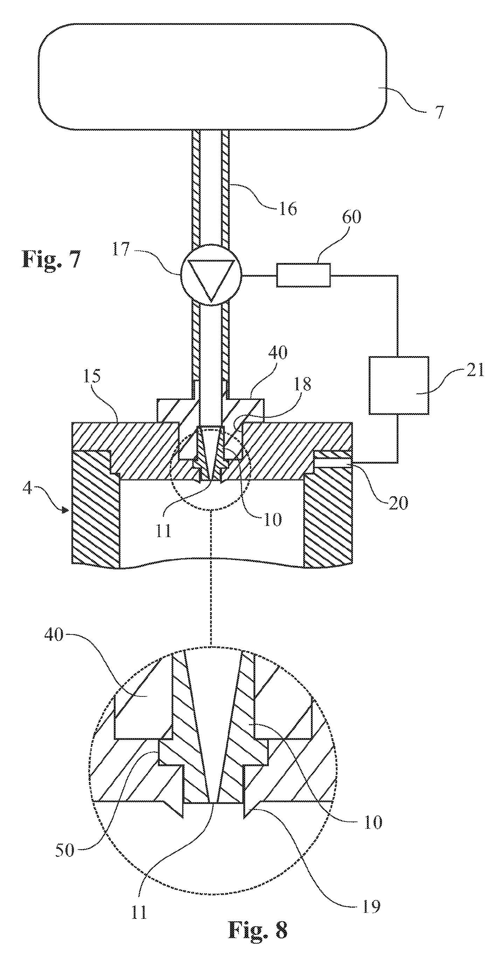

To be able to control how can **1** bursts, it is best to place can **1** in a holder before creating an excessive pressure in the interior of the can. Then, can **1** is suitably placed in a holder **4** having a substantially encircling inner wall **5**, which clasps can **1** at least partly and keeps it in place, whereafter the interior excessive pressure is created. A holder that is suitable for this purpose is illustrated in Figs. 4 to 7. As shown in Figs. 4 to 7, a holder **4** may comprise two halves **13,14**, which may be moved towards and away from each other. The two halves **13, 14** here are shown having edge flanges **31**. When the two halves **13, 14** are brought together and meet, they together form a holder having an inner wall **5** that may clasp a preservation can. In Fig. 5 there is shown that the inner wall **5** is a circularly cylindrical wall, what is natural, since this represents the most common exterior shape of a preservation can. However, it is realized that in principle any other shapes are conceivable, a square shape, for instance. The edge flanges **31** may be provided with guides, opposed holes and dowels, for example, to warrant a proper contact between the two holder halves **13, 14**. Advantageously, holder **4** may have a lid in the shape of a part **15** that forms a support surface for a can, and which may be brought into contact with an end of the can **1**, or against which a can end may be applied. As is best shown in Fig. 4 and Fig. 7, that part of holder **4**, which forms a support surface, may be provided with a through hole **18**, through which hole **18** a predetermined amount of liquid may be aimed at a can **1** placed in holder **4**.

We now refer to Fig. 7. The fluid or liquid to be supplied to the can is best supplied from a pressurized tank **7**, in which tank **7** the pressure is at least 200 bar, preferably at least 500 bar, and still more preferred 1000 bar or more. From the pressurized tank **7** there runs a pipe **16** for pressurized liquid. In Fig. 7 there is shown that a pipe **16** runs from the pressure tank **7** via a valve **17** and connects to holder **4** by holder part **15**, which forms a lid on holder **4**. Pipe **16** from pressure tank **7** then may open in a nozzle **10** located in that part **15** of holder **4**, which forms a support surface. In Fig. 7 it is shown that holder part **15** may have a special nozzle holder **40**, in which nozzle **10** may be placed. Fig. 7 and Fig. 8 illustrate that nozzle **10** may have a collar **50** to fix the nozzle between opposed surfaces on nozzle holder **40** and the remainder of that holder part **15**, which forms a support surface. It is realized that the embodiment shown in Fig. 7 and Fig. 8 merely is an example of a possible design, and that nozzle **10** may be fixed in holder part **15** also in other ways, or may be integrated with that holder part **15**, which forms a support surface.

The liquid supplied from the pressurized tank **7** may be used to make a hole in can **1**, whereupon liquid from the pressurized tank may penetrate into the interior space **2** of can **1** and create an excess pressure in can **1**.

As an alternative, before supplying liquid, it is possible to make a weakening in a wall **8** (the wall of a can lid, for example) of can **1** at the point where liquid from the pressurized tank **7** later is to be applied. Instead of making a weakening it is also possible to make a hole **9** in one of the walls **8** of can **1**, and then supply a fluid through hole **9** in the can wall, so that an excessive pressure results in the interior of can **1.** Thus, as best illustrated in Fig. 8, a device for carrying out the method of the invention suitably comprises means **19** for weakening or piercing the wall of can **1** at a point on the surface of can **1**, where pressurized liquid is to be applied.

Liquid is supplied from the pressurized tank **7** to the interior space **2** of can **1** for a period of at most 3 seconds, preferably at most 2 seconds, and still more preferred at most 1 second.

Advantageously, liquid supplied from the pressurized tank **7** may be conducted through a nozzle **10** having a discharge opening **11**, the diameter of which is at most 2 mm, preferably at most 1,5 mm, and still more preferred at most 1 mm. As indicated in Fig. 8, the nozzle may converge conically.

It is to be understood, that the can to be emptied of its contents normally is a substantially cylindrical can **1** of circular cross-section, said cylindrical can **1** of circular cross-section having two end walls **8**, **12** facing each other, where at least one end wall **8** is a lid **8**, which is connected to can **1** by a separate closing operation, such as seaming, for example. In conventional cans, normally both ends of the can are provided with end walls in the shape of seamed lids. As described above, holder **4** comprises a plurality of parts **13, 14, 15**, which may be moved towards or away from one another to grip or release can **1**. In a first step of the emptying procedure, parts of holder **4** are being moved towards one another to grip can **1** around its cylindrical surface of circular cross-section and one of the can end walls **8**. Liquid then is supplied from the pressurized tank **7** through a nozzle **10** located in a part of holder **4** brought to bear against one of the end walls **8** of can **1.** In a preferred embodiment of the invention, this is done in that nozzle **10** is mounted in a lid **15** of holder **4**. When liquid is being supplied from pressure tank **7**, the liquid makes a hole in the can lid at that end that faces holder lid **15.** Alternatively, the liquid enters through a hole **9** made in advance. Then an excess pressure is created in the interior of the can, so that an opposed end wall **12** in the shape of a lid **12** will be pushed out of can **1** by the excess pressure together with contents **3** of can **1.**

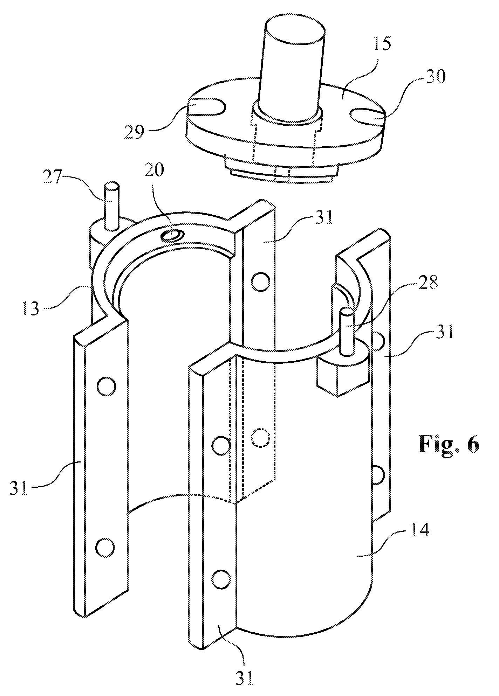

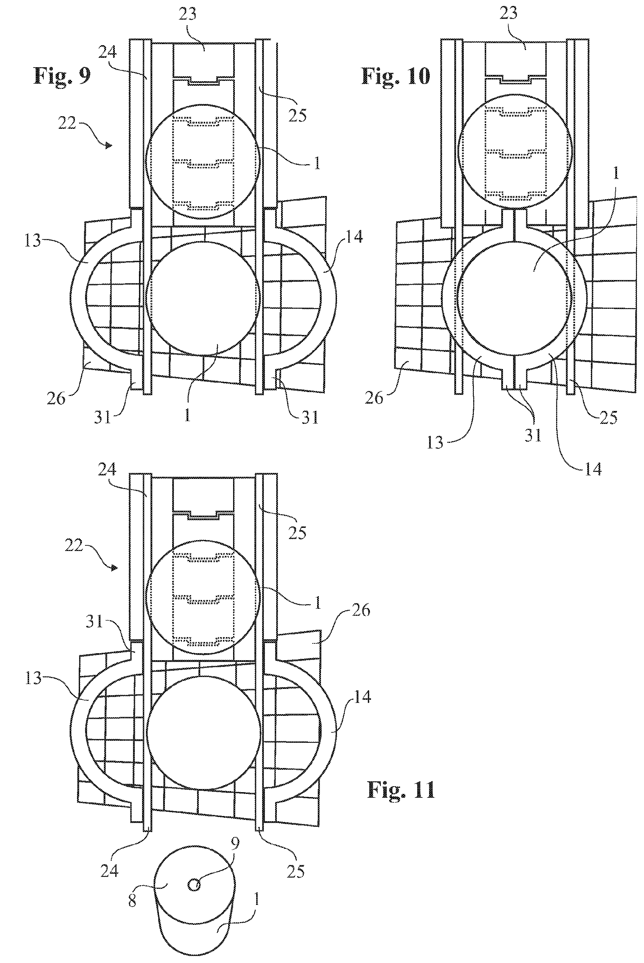

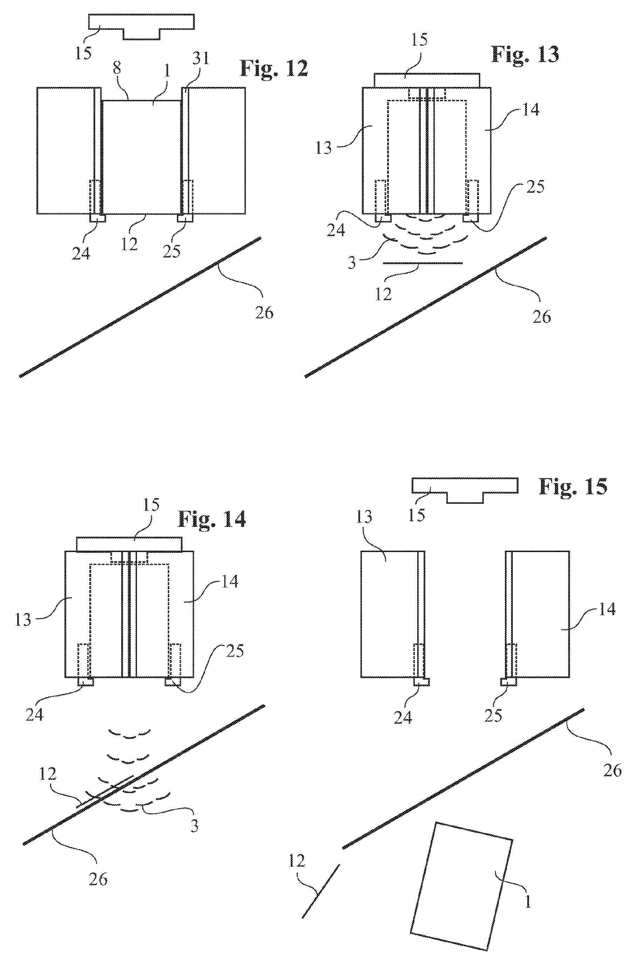

A sequence of the method of the invention will now be explained with reference primarily to Figs. 9 to 11 and Figs. 12 to 15. A series of cans **1**, particularly preservation cans, is carried forward by a conveyor **22**. The conveyor has a movable belt or a movable chain **23** carrying cans **1** forward in conveyor **22**. Here conveyor **22** is shown provided with guides **24, 25** that support the cans. In Fig. 9, a can **1** is shown that has arrived at an emptying station, where a holder **4** is ready to grip can **1.** In Fig. 10 and Fig. 12 a situation is shown, where the two halves **13**, **14**, of holder **4** have been brought together and keep can **1** in place, but where holder lid **15** still has not been brought to bear against the can. In Fig. 13, lid **15** of holder **4** is brought together with the upper portion of the rest of holder **4**. As will be seen in Fig. 6, dowels **27**, **28** on holder halves **14, 14** then may engage in guides **29, 30** in lid **15**. When lid **15** of holder **4** is brought together with the rest of the holder, the holder lid **15** will also bear against an upper end of can **1** and will then form a support surface for the can end. Fig. 8 shows that holder lid **15** may have means **19** for weakening or piercing can **1**, when holder lid **15** abuts against can **1.** Such means **19** may be a protruding sharp edge surrounding at least part of the opening of nozzle **10**. If holder lid **15** is provided with means **19** for weakening or piercing can **1**, a weakening or a hole **9** will result at the can end. A sensor **20** may be placed adjacent holder **4** to detect when holder lid **15** has been brought to bear against can **1.** As shown schematically in Fig. 7**,** sensor **20** is connected to a control unit **21** for valve **17**, which control unit **21** is arranged to open valve **17**, when a can **1** contacts the support surface, so that pressurized liquid can be applied to the end of can **1**. Fig. 7 shows schematically that control unit **21** is connected to an actuator **60** for valve **17**, so that a signal from control unit **21** may cause actuator **60** to open valve **17** and keep it open for a short moment, preferably at most 1 second. When valve **17** opens, pressurized fluid (preferably liquid) for a short moment will be conducted against that end of can **1**, which bears against holder lid **15**. The fluid or the liquid is pressurized and passes through a narrow opening in nozzle **10**. The liquid then hits the can violently and pierces the end wall of can **1.** Alternatively, liquid/fluid penetrates through a hole **9** made in advance and into the interior space **2** of can **1.** The pressure wave passing through can **1** pushes lid **12** away as shown in Fig. 13 and Fig. 14. Together with lid **12**, also the contents **3** of the can are thrown out of the can. Fig. 14 shows that a screen **26** is placed under the emptying station. The contents **3** of the can easily pass through screen **26,** while can lid **12** slides on the sloping screen **26.** Fig. 11 and Fig. **15** foreshadow a subsequent step, where a new can **1** is being fed forward, and thereby pushes the just emptied can forward, so that it may fall down into a container, for example, or to a new conveyor. In the example described above, the emptying station has just one holder **4** for cans. However, it is realized that an emptying station may have a plurality of such holders placed in a series after one another, so that a plurality of cans may be emptied simultaneously.

In a first trial with the method of the invention, a holder was used, which in all essentials was identical with the can holder described above. A pressure tank with water and a pressure of about 1000 bar was connected via a pipe to the can holder lid.

Between the pressure tank and the can holder there was a manually operated valve in the pipe. The pipe opened in a nozzle having an outlet opening, the diameter of which was about 1 mm. After a preservation can was placed in the can holder, the valve was opened for a short moment, at a rough estimate no more than 1 second. No hole had been made in the can. When pressurized water was supplied, the water immediately made an entrance hole in the can end wall, and the can lid fixed at the opposite end of the can was pushed away, and the foodstuff contents of the can was thrown out. The estimated liquid consumption was about 0.3 liters. The can was almost completely emptied of foodstuffs, so that the can afterwards displayed only very few traces of food particles. Thus, the separation was almost one hundred percent.

Embodiments of the method of the invention may be conceived, where can 1 is not placed in a holder having encircling walls. As an example, can 1 may be placed on a plane base, after which an interior excess pressure is brought about.

Consequently, the invention brings about a very rapid and efficient separation of the can contents from the can as such. The consumption of water as well as power will be very low in spite of an almost complete separation being achieved. Thereby, the method becomes very harmless to the environment.

## Claims

1. A method of emptying cans (1), said method comprising
a) providing a can (1) having an interior space (2), said interior space (2) having a content of foodstuffs (3), for example,
b) placing the can in a holder (4) having a substantially encircling inner wall (5), which at least partly clasps the can (1) and keeps it in place, and
c) creating an excess pressure in the interior space (2) of the can (1), so as to make the can (1) burst and substantially the entire contents (3) of the can (1) be thrown out of the can (1).

2. A method according to claim 1, ***characterized by*** creating the excess pressure by supplying a fluid (6) to the interior space (2) of the can (1).

3. A method according to claim 2, ***characterized in* that** the fluid (6) supplied to the can (1) interior space (2) is a liquid, preferably water.

4. A method according to claim 3, ***characterized by*** supplying the liquid from a pressurized tank (7), in which tank (7) the pressure is at least 200 bar, preferably at least 500 bar, and still more preferred 1000 bar or more.

5. A method according to claim 4, ***characterized by*** utilizing the liquid supplied from the pressurized tank (7) to make a hole in the can (1), whereafter liquid from the pressurized tank may penetrate into the interior space (2) of the can (1) and create an excess pressure in the can (1).

6. A method according to claim 5, ***characterized by*** prior to supplying liquid, weakening a wall (8) of the can (1) at a point where liquid from the pressurized tank (7) is to be applied.

7. A method according to any one of claims 2-4, ***characterized by*** first making a hole (9) in one of the can (1) walls (8) and then supplying a fluid through the hole (9) in the can wall, so that an excess pressure will be created in the interior of the can (1).

8. A method according to any one of claims 4-7, ***characterized by*** supplying liquid from the pressurized tank (7) to the interior space (2) of the can (1) for a period of at most 3 seconds, preferably at most 2 seconds, and still more preferred at most 1 second.

9. A method according to any one of claims 4-8, ***characterized by*** supplying liquid from the pressurized tank (7) through a nozzle (10) having a discharge opening (11), the diameter of which is at most 2 mm, preferably at most 1,5 mm, and still more preferred at most 1 mm.

10. A method according to any one of claims 4-8, ***characterized in* that** the can (1) is a substantially cylindrical can (1) of circular cross-section, said cylindrical can (1) of circular cross-section having two end walls (8,12) facing each other, at least one end wall (8) being a lid (8), which is connected to the can (1) by a separate closing operation, such as seaming, for example, that the holder (4) comprises a plurality of parts (13, 14, 15), which may be moved towards or away from one another to grip or release the can (1), that in a first step of the emptying procedure, parts of the holder (4) are being moved towards one another to grip the can (1) around its cylindrical surface of circular cross-section and one of the can end walls (8), that liquid then is supplied from the pressurized tank (7) through a nozzle (10) located in a part of the holder (4) brought to bear against one of the end walls (8) of the can (1), so that an opposed end wall (12) in the shape of a lid (12) will be pushed away from the can (1) by the excess pressure together with the contents (3) of the can (1).

11. A device for handling and emptying cans (1), said device comprising a holder (4), in which a can (1) to be emptied may be placed, and which holder (4) has a substantially encircling inner wall (5) but is open outwards in at least one direction, and means for creating such an excessive pressure in the interior of the can (1) in relation to the surroundings of the can (1), that a lid (12) of the can (1) will be pushed out of the can (1) and thrown away therefrom in the outward open direction of the holder (4).

12. A device according to claim 11, ***characterized in* that** its means for creating an excessive pressure in the interior of a can (1) includes a tank (7) for liquid, which tank (7) may be pressurized, a pipe (16) away from the tank (7), and a valve (17) arranged in connection with said pipe (16) for releasing a predetermined amount of liquid, which through the pipe (16) may be aimed at a can (1) placed in the holder (4).

13. A device according to claim 12, ***characterized in* that** the holder (4) is provided with a part (15) forming a support surface, against which one end of the can (1) may be applied.

14. A device according to claim 13, ***characterized in* that** the part (15) of the holder (4) that forms a support surface is provided with a through bore (18), through which bore (18) a predetermined amount of liquid may be aimed at a can (1) placed in the holder (4), and that the pipe (16) from the pressure tank (7) opens in a nozzle (10) placed **in that** part (14) of the holder (4) that forms a support surface.

15. A device according to any one of claims 14-16, ***characterized in* that** it additionally includes means (19) for weakening or piercing the wall of the can (1) at a point on the surface of the can (1), where pressurized liquid is to be applied.

16. A device according to any one of claims 14-17, ***characterized in* that** at least one sensor (20) is positioned adjacent the holder (4) for detecting when that part of the holder that forms a support surface has been brought to bear against a can (1), and that the sensor (20) is connected to a control unit (21) for the valve (17), which control unit (21) is arranged to open the valve (17) when a can (1) bears against the support surface, so that pressurized liquid may be applied against the end of the can (1).
